# EUROPÄISCHE PATENTSCHRIFT

(11) **EP 2 553 536 B1**
(45) Veröffentlichungstag und Bekanntmachung des Hinweises auf die Patenterteilung: **14.05.2014**
(21) Anmeldenummer: 11706174.7
(22) Anmeldetag: 19.02.2011
(51) Int. Cl.: G05B 19/401, G05B 19/418

(54) **VERFAHREN ZUM BETREIBEN EINER MIT MINDESTENS EINEM ROBOTER BESTÜCKTEN BEHANDLUNGSKABINE**
METHOD FOR OPERATING A PROCESSING ENCLOSURE COMPRISING AT LEAST ONE ROBOT
PROCÉDÉ PERMETTANT DE FAIRE FONCTIONNER UNE CABINE DE TRAITEMENT ÉQUIPÉE D'AU MOINS UN ROBOT

(30) Priorität: 30.03.2010 DE 102010013391
(43) Veröffentlichungstag der Anmeldung: 06.02.2013
(73) Patentinhaber: Eisenmann AG, 71032 Böblingen (DE)
(72) Erfinder: EHRENLEITNER, Franz, 72213 Altensteig-Walddorf (DE)
(74) Vertreter: Ostertag, Ulrich
(86) Internationale Anmeldenummer: PCT/EP2011/000810
(87) Internationale Veröffentlichungsnummer: WO 2011/120610

(56) Entgegenhaltungen:
- EP-A2- 1 345 099
- WO-A1-99/46723
- WO-A1-2009/134708
- WO-A2-03/067183
- US-A1- 2004 251 866
- US-A1- 2009 062 959

## Beschreibung

Die Erfindung betrifft ein Verfahren zum Betreiben einer mit mindestens einem Roboter bestückten Behandlungskabine nach dem Oberbegriff des Patentanspruchs 1.

Beim Einsatz von Industrierobotern wird durch ein am Roboter montiertes Werkzeug- oder Greifersystem ein Gegenstand gegriffen, bearbeitet, montiert, beschichtet, wozu insbesondere auch eine Grob- und eine Feinnahtabdichtung zählt. Alle diese und vergleichbare Vorgänge werden vorliegend unter dem Begriff "behandeln" zusammengefasst. Um nun diesen Gegenstand behandeln zu können, ist es notwendig, dessen Lage im Bezug zum Roboter mit hinreichender Genauigkeit zu kennen. Dies kann dadurch sichergestellt werden, dass die Lage des Gegenstandes durch ein mechanisches Positioniersystem mit einer für die fragliche Behandlung hinreichenden Genauigkeit in eine definierte Lage gebracht wird. Dies ist aber für große und sperrige Teile, beispielsweise für Fahrzeugkarosserien, oft nur mit unverhältnismäßig hohem Aufwand möglich.

Daher wird bei Verfahren ähnlich denen der eingangs genannten Art der zu behandelnde Gegenstand durch ein Fördersystem in der Kabine in eine Bearbeitungsposition gebracht, die ausreichend genau ist, damit der Roboter die gewünschten Positionen, welche zur Erfüllung der Aufgabe notwendig sind, erreichen kann. Dies ist gemeint, wenn eingangs von der "Reichweite" des Roboters die Rede ist. Diese Behandlungsposition ist aber nicht genau genug, um die gewünschte Behandlung mit der geforderten Genauigkeit durchführen zu können. Daher werden stationäre Messeinrichtungen, zum Beispiel Kamerasysteme, in der Kabine eingesetzt, welche die Lage und die Orientierung des Gegenstandes erfassen und an die Robotersteuerung übermitteln. Die Robotersteuerung ermittelt nun auf der Basis der festgestellten Lage des zu bearbeitenden Gegenstandes die für die Programmabfolge notwendigen Stützpunkte in dem durch die Roboterachsen definierten Roboter-Koordinatensystem. Zur Behandlung des Gegenstandes werden dann die Roboterachsen entsprechend angesteuert.

Damit der "Tool-Center-Point" des Roboters der durch mehrere Stützpunkte vorgegebenen Trajektorie gegenüber dem zu behandelnden Gegenstand folgen kann, muss dieser Gegenstand zunächst vermessen werden, was im Allgemeinen durch eine Koordinaten-Messmaschine erfolgt. Der zu behandelnde Gegenstand wird mit Referenzpunkten versehen, an denen sich die Koordinaten-Messmaschine orientieren kann. In der Behandlungsposition in der Kabine werden die die stationäre Messeinrichtung bildenden Kameras auf diese Referenzpunkte der Gegenstände ausgerichtet, wodurch die Lage des Gegenstands-Koordinatensystem in Bezug zu den Kameras bestimmt werden kann.

Um nun dieses Gegenstands-Koordinatensystem mathematisch mit dem Roboter-Koordinatensystem verknüpfen zu können, wird bei bekannten Verfahren ähnlich denen der eingangs genannten Art auf jeden Roboter, der sich in der Behandlungskabine befindet, ein Messsystem montiert, welches die Gegenstands-Referenzpunkte vermisst. Da jeder Roboter mindestens drei Referenzpunkte ermitteln und dafür jeweils mit einem Messinstrument ausgerüstet werden muss, ist der zeitliche und personelle Aufwand erheblich. Dies gilt vor allem in der Automobilindustrie, wo Fahrzeugkarosserien viele automatische Roboter-Behandlungszellen im Produktionszyklus durchlaufen. Erschwerend kommt hinzu, dass dort in einer Bearbeitungsstraße nicht nur ein Karossenmodell sondern bis zu einem Dutzend oder mehr verschiedene Modelle behandelt werden müssen. Wenn alle Behandlungszellen und alle Roboter eingemessen werden sollen, sind hunderte von Messungen mit entsprechend häufigem Messinstrumentenwechsel notwendig.

Heutige Industrieroboter, sofern sie nicht speziell für hochgenaue Anwendungen ausgelegt sind, arbeiten mit einer Absolutgenauigkeit von einigen Millimetern. Bei der Herstellung einer Beziehung zwischen dem Roboter-Koordinatensystem und einem anderen Koordinatensystem gehen bei der bekannten Vorgehensweise die Abweichungen des Roboters von der Absolutgenauigkeit in die Qualität des anderen Koordinatensystemes ein. Werden Programme auf unterschiedliche Roboter bzw. Behändlungszellen übertragen, können auf diese Weise erhebliche Positionsfehler entstehen, die ohne Weiteres das Doppelte des ursprünglichen Absolutfehlers des Roboters betragen können.

Ein Verfahren der eingangs genannten Art ist aus der EP 1 345 099 A2 bekannt geworden. Dort wird ein als "Welt-Koordinatensystem" bezeichnetes kabinenfestes Bezugssystem verwendet, in welchem in einem vorbereitenden Vermessungsvorgang Roboter, Greifer und Kameras vermessen werden; die ermittelten Koordinaten werden in einem Bildverarbeitungssystem gespeichert. Während des Betriebs werden die zu behandelnden Gegenstände in eine individuelle Behandlungsposition gebracht und vermessen, wobei Abweichungen von einer idealen Behandlungsposition ermittelt werden. Diese Abweichungen werden berücksichtigt bei der Berechnung der vom Roboter anzufahrenden Greiferpositionen. Dadurch ist die Absolutgenauigkeit verbessert, der Aufwand während des Einmessens jedoch recht hoch.

Aufgabe der vorliegenden Erfindung ist es, ein Verfahren der eingangs genannten Art aufzuzeigen, bei welchem der Vorbereitungs- und Vermessungsaufwand reduziert ist.

Diese Aufgabe wird erfindungsgemäß durch das im Patentanspruch 1 angegebene Verfahren gelöst.

Wie im Stand der Technik an sich bekannt, wird mit dem Kabinen-Koordinatensystem ein "tertium comparationis" geschaffen, also ein System, auf das sowohl der Roboter als auch der zu behandelnde Gegenstand in seiner individuellen Behandlungsposition zur Bestimmung der Koordinaten zurückgreifen kann. Die Behandlungskabine als dieses "tertium comparationis" zu verwenden, ist deshalb vorteilhaft, weil diese ohnehin exakt vermessen werden muss, um die dort aufzustellenden Gerätschaften genau montieren zu können. Das Kabinen-Koordinatensystem muss, um zum Beispiel im Zuge eines Austauschs eines defekten Roboters reproduzierbar zu sein, durch entsprechende Markierungen als Referenzpunkte festgelegt werden. Auf diese Weise steht das Kabinen-Koordinatensystem ohne zusätzlichen Aufwand ständig zur Verfügung.

Erfindungsgemäß wird ein mobiles, mit einem Messgegenstand verbundenes Messsystem eingesetzt, der dieselben Referenzpunkte wie die zu behandelnden Gegenstände aufweist, und die Einheit aus Messgegenstand und mobilem Messsystem kann gegebenenfalls durch mehrere Behandlungskabinen hindurchgefahren werden. Dadurch wird der messtechnische Aufwand bei der Vorbereitung des eigentlichen Betriebes der Behandlungskabine erheblich reduziert.

Die Referenzpunkte an den zu behandelnden Gegenständen, am Messgegenstand oder an der Behandlungskabine brauchen nicht notwendig eigens angebrachte Teile zu sein. In manchen Fällen können hierfür auch markante, ohnehin vorhandene Stellen, beispielsweise Bohrungen oder Ecken, eingesetzt werden.

Zweckmäßig ist, dass als stationäre Messeinrichtung in der Behandlungskabine mindestens eine Kamera verwendet wird. Kameras eignen sich besonders gut dafür, kleine Positionsänderungen zu ermitteln, wobei es nicht auf die absolute Lage des vermessenen Referenzpunktes bzw. Gegenstandes ankommt.

Zur Vermessung der stationären Referenzpunkte empfiehlt sich die Verwendung eines Laser-Trackers. Dieser ist in der Lage, mit geringstem Aufwand die zu den Referenzpunkten führenden Vektoren und damit deren Koordinaten zu bestimmen.

Aus demselben Grund empfiehlt es sich, dass als mobiles Messsystem ein Laser-Tracker eingesetzt wird.

Häufig ist es nicht möglich, mit dem mobilen Messsystem, welches mit dem Messgegenstand verbunden ist, auf direktem Wege die Referenzpunkte des Messgegenstandes im Mess-Koordinatensystem zu ermitteln. Dann eignet sich eine Vorgehensweise, bei welcher zur Vermessung der Koordinaten der Referenzpunkte des Messgegenstandes im Mess-Koordinatensystem ein externes, stationäres Messsystem herangezogen wird, wobei das externe, stationäre Messsystem drei stationäre, nicht mit dem Messgegenstand verbundene Referenzpunkte sowie die Referenzpunkte des Messgegenstandes und das mobile Messsystem die stationären Referenzpunkte vermisst. Das externe, stationäre Messsystem bildet also eine Art "Vermittler" zwischen dem Mess-Koordinatensystem und dem Gegenstands-Koordinatensystem.

Als externes, stationäres Messsystem wird vorzugsweise eine Koordinaten-Messmaschine eingesetzt. Dies insbesondere deshalb, weil, wie oben schon erwähnt, ohnehin eine Vermessung des Messgegenstandes mit einer Koordinaten-Messmaschine erforderlich ist.

Wie ebenfalls oben schon ausgeführt, sind in vielen Fällen in einer Bearbeitungslinie mehrere Behandlungs-kabinen vorgesehen, die von dem Messgegenstand und den zu behandelnden Gegenständen hintereinander durchfahren werden. Umso mehr derartige hintereinander angeordnete Behandlungskabinen vorhanden sind, umso mehr kommen die Vorzüge der vorliegenden Erfindung zum Tragen.

Besonders gut eignet sich die vorliegende Erfindung zur Behandlung von Fahrzeugkarosserien, wobei die Art der Behandlung häufig ein Beschichten, insbesondere ein Nahtabdichtungen, sein kann.

Ein Ausführungsbeispiel der Erfindung wird nachfolgend anhand der Zeichnung näher erläutert; es zeigen:
- Figur 1: schematisch und perspektivisch eine Nahtabdichtungskabine für Fahrzeugkarosserien;
- Figur 2: die Vermessung eines Kabinen-Koordinatensystems;
- Figur 3: die Vermessung eines in der Kabine der Figur 1 vorgesehenen Roboters;
- Figur 4: die Vermessung eines mit einer Messkarosserie verbundenen Messsystemes;
- Figuren 5 und 6: die Vermessung einer individuellen Behandlungsposition der Messkarosserie in der Nahtabdichtungkabine von Figur 1;
- Figur 7: eine Ansicht, ähnlich der Figur 4 für eine andere Art des Messsystemes.

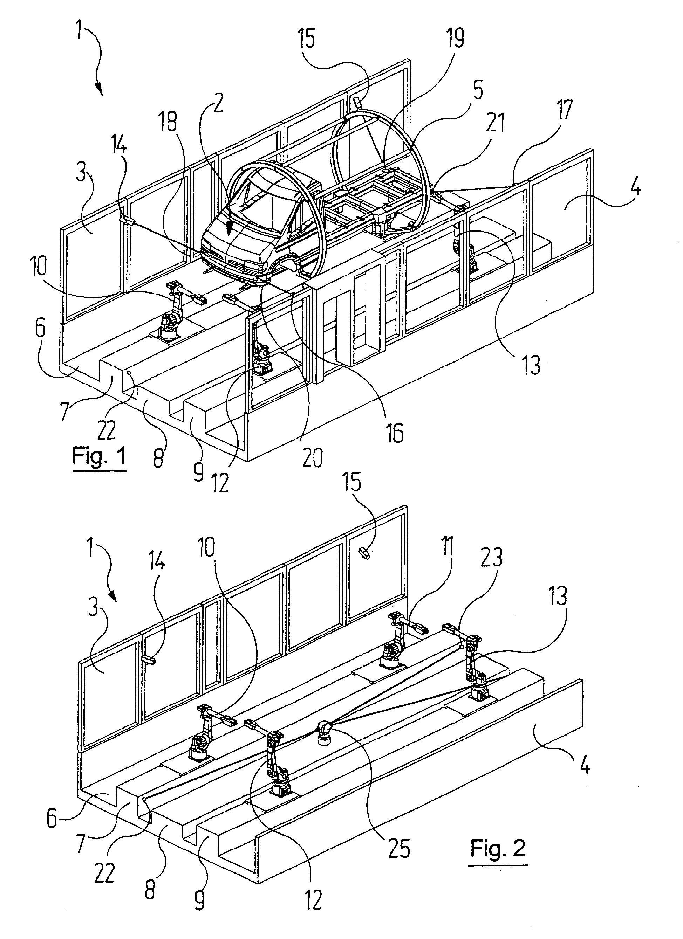

In Figur 1 ist perspektivisch ein Einblick in eine Kabine dargestellt, die insgesamt mit dem Bezugszeichen 1 gekennzeichnet ist und der Grobnahtabdichtung an Fahrzeugkarosserien 2 dient. Die Kabine 1 besitzt zwei parallele Seitenwände 3, 4 sowie eine nicht dargestellte Decke und ebenfalls nicht dargestellte gegenüberliegende Stirnwände, in denen sich die Tore befinden, über welche die Fahrzeugkarosserien 2 in den Innenraum der Kabine 1 eingefahren werden können. Hierzu sind die Fahrzeugkarosserien 2 von einem Halterungsgestell 5 gehalten, das von einem nicht gezeigten Fördersystem, beispielsweise einer Hängebahn, der Kabine 1 zugeführt, durch diese hindurchtransportiert und gegebenenfalls in nachfolgende, ähnlich gebaute Kabinen eingebracht wird.

Die Kabine 1 besitzt einen Boden 6, der aus hier nicht näher interessierenden Gründen parallel zur Förderrichtung verlaufende, rippenartig nach oben verlaufende Profile 7, 8, 9 aufweist. Auf den beiden den Seitenwänden 3, 4 benachbarten Profilen 7, 9 sind jeweils zwei Roboter 10, 11, 12, 13 angebracht (der Roboter 11 ist in Figur 1 durch die Fahrzeugkarosserie 2 bzw. die Halterung 5 verdeckt), die jeweils eine Applikationseinrichtung zum Aufbringen des Abdichtungsmaterials auf die Fahrzeugkarosserie 2 tragen. Hierzu wird die Fahrzeugkarosserie 2 in einer Position angehalten, die so genau definiert ist, dass die Roboter 10, 11, 12, 13 alle ihnen zugedachten Nahtbereiche der Fahrzeugkarosserie 2 bespritzen können.

Da es sehr aufwendig wäre, mit hinreichender Genauigkeit alle aufeinanderfolgende Fahrzeugkarosserien 2 exakt an derselben Stelle zum Nahtabdichten anzuhalten, ist es erforderlich, die jeweilige individuellen Behandlungsposition der einzelnen Fahrzeugkarosserien 2 zu ermitteln. Hierzu dient ein stationäres Messsystem, das im vorliegenden Falle vier an den Seitenwänden 3, 4 der Kabine 1 angebrachte Kameras 14, 15, 16, 17 umfasst (die beiden in Figur 1 vorderen Kameras 16, 17 sind durch die Seitenwand 4 weitgehend verdeckt). Die Kameras 14, 15, 16, 17 ermitteln die Position von vier fest mit der Fahrzeugkarosserie 2 verbundenen Referenzpunkten 18, 19, 20, 21, bei denen es sich beispielsweise um vier mit der Fahrzeugkarosserie 2 verbundene Messkugeln handeln kann.

Grundsätzlich wäre es ausreichend, wenn nur drei nicht auf einer Geraden liegende Referenzpunkte an der Fahrzeugkarosserie 2 verwendet würden. Wird, wie im dargestellten Fall, ein vierter Referenzpunkt verwendet, so dient dieser im Wesentlichen Kontrollzwecken und/oder der Verbesserung der Messgenauigkeit.

Nachdem die Kameras 14, 15, 16, 17 die Referenzpunkte 18, 19, 20, 21 der Fahrzeugkarosserie 2 und damit letztendlich die Lage eines der Fahrzeugkarosserie 2 immanenten Koordinatensystems (hier "Karossen-Koordinatensystem" genannt) in der Kabine 1 ermittelt haben, werden die Achsen der Roboter 10, 11, 12, 13 unter Berücksichtigung dieser festgestellten Lage so angesteuert, dass die Bewegungsbahn des "Tool-Center-Point" (TCP) der Roboter 10, 11, 12, 13 exakt die gewünschte Trajektorie beim Nahtabdichtungsvorgang durchlaufen. Diese Trajektorie ist durch eine Mehrzahl von Stützpunkten in bekannter Weise definiert, zwischen denen die Steuerung der Roboter 10, 11, 12, 13 eine Interpolationskurve errechnet, welcher der TCP der Roboter 10, 11, 12, 13 zwischen den einzelnen Stützpunkten folgt. Aus den Abweichungen der individuellen Behandlungspositionen der verschiedenen aufeinanderfolgenden Fahrzeugkarosserien folgt zwangsläufig, dass die Stützpunkte entsprechend den Messungen der Kameras 14, 15, 16, 17 für jede Fahrzeugkarosserie 2 neu errechnet werden müssen.

In welcher Weise dies geschieht, wird nachfolgend anhand der Figuren 2 bis 6 beschrieben.

Zur Vorbereitung des Betriebes der Kabine 1 sind mehrere Vorgänge erforderlich:

Zunächst wird für jede Kabine 1 ein eigenes, kabinenfestes Koordinatensystem, "Kabinen-Koordinatensystem" genannt, eingerichtet. Dies geschieht, wie in Figur 2 dargestellt, dadurch dass in dem Innenraum der Kabine 1, in Figur 2 an den Profilen 7, 9, permanente Referenzpunkte 22, 23, 24 (der Referenzpunkt 24 ist durch das Profil 9 verdeckt) angebracht werden. Auch bei diesen Referenzpunkten 22, 23, 24 kann es sich um Messkugeln handeln. Auch im Falle der Kabine 1 könnte grundsätzlich ein vierter Referenzpunkt zu Kontrollzwecken und zur Verbesserung der Messgenauigkeit eingesetzt werden.

Die genaue Position der Referenzpunkte 22, 23, 24 wird mit Hilfe einer stationären Messeinrichtung 25 ausgemessen. Im dargestellten Falle handelt es sich bei dieser um einen Laser-Tracker, der auf der Oberseite des mittleren Profiles 8 befestigt ist. Der Laser-Tracker 25 ermittelt die Vektoren, die von ihm zu den einzelnen Referenzpunkten 22, 23, 24 führen, aus denen selbstverständlich gegebenenfalls auch die Position in einem kartesischen Koordinatensystem errechnet werden kann.

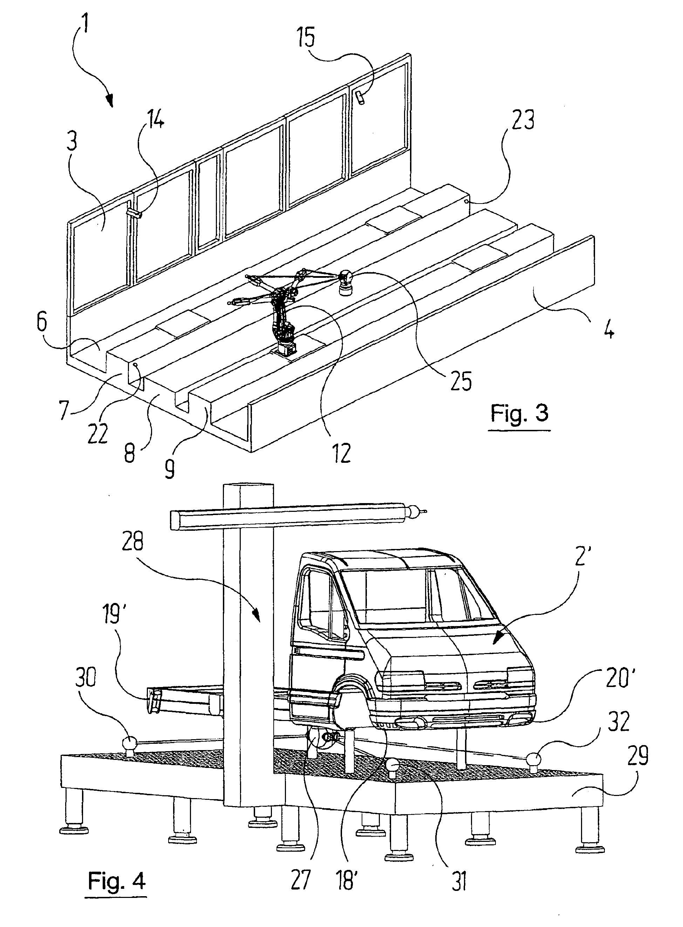

Ein zweiter Vorbereitungsschritt ist in Figur 3 dargestellt. Es handelt sich hier um die Vermessung der verschiedenen Roboter 10, 11, 12, 13. Hierzu wird, ebenfalls mit Hilfe des Laser-Trackers 25, die Lage einer Achse aller Roboter 10, 11, 12, 13 vermessen, indem der entsprechende Roboterarm um die fragliche Achse verdreht und die Position des TCP in drei unterschiedlichen Winkelstellungen vermessen wird. Da die geometrischen Verhältnisse innerhalb der Roboter 10, 11, 12, 13 bekannt sind, ist auf diese Weise eine Relation zwischen dem Kabinen-Koordinatensystem und dem internen Roboter-Koordinatensystem, also dem durch die verschiedenen Achsen der Roboter 10, 11, 12, 13 definierten Koordinatensystem, hergestellt. In Figur 3 ist der Übersichtlichkeit halber nur die Vermessung des Roboters 12 gezeigt; die anderen, in Figur 3 nicht dargestellten Roboter 10, 11, 13 werden selbstverständlich in derselben Weise vermessen.

Figur 4 zeigt schließlich einen dritten Vorbereitungsschritt, bevor die Kabine 1 in Betrieb gehen kann. In Figur 1 ist eine Messkarosserie 2' dargestellt, deren Geometrie und internes Koordinatensystem mit Geometrie und internem Koordinatensystem der später zu behandelnden Fahrzeugkarosserien 2 identisch übereinstimmt. Grundsätzlich wäre es für den hier beschriebenen Schritt ausreichend, wenn ein Messgegenstand eingesetzt würde, der nur dieselben Referenzpunkte wie die Fahrzeugkarosserien 2 aufweist. An der Unterseite der Messkarosserie 2' ist eine Messeinrichtung 27 befestigt, bei der es sich erneut vorzugsweise um einen Laser-Tracker handelt.

Es wird nun eine Beziehung zwischen dem Koordinatensystem des Laser-Trackers 27 und dem durch die Referenzpunkte 18', 19', 20", 21' der Messkarosserie 2' definierten Karosserie-Koordinatensystem hergestellt. Am einfachsten wäre es, wenn man direkt mit Hilfe des Laser-Trackers 27 die Karosserie-Referenzpunkte 18', 19', 20', 21' ausmessen könnte. Dies ist im Allgemeinen jedoch aus geometrischen Gründen nicht möglich. Daher erfolgt die Herstellung der Beziehung zwischen dem Koordinatensystem des Laser-Trackers 27 und dem Karosserie-Koordinatensystem mit Hilfe eines externen Messsystemes 28. Im dargestellten Ausführungsbeispiel wird als externes Messsystem 28 eine Koordinaten-Messmaschine eingesetzt; dies deshalb, weil eine solche Koordinaten-Messmaschine 28 ohnehin zum Vermessen der Messkarosse 2' erforderlich ist. Die Koordinaten-Messmaschine 28 ist mit einer Plattform 29 verbunden, auf welcher drei als Messkugeln ausgestaltete Referenzpunkte 30, 31, 32 befestigt sind. Erneut wäre die Verwendung eines vierten Referenzpunktes an dieser Stelle denkbar.

Nunmehr werden die Plattform-Referenzpunkte 30, 31, 32 durch den mit der Messkarosserie 2' verbundenen Laser-Tracker 27 ausgelesen. Die Koordinaten-Messmaschine 28 ihrerseits misst ebenfalls die Position der Plattform-Referenzpunkte 30, 31, 32 und zudem die Position der Karosserie-Referenzpunkte 18', 19', 20', 21'. Nunmehr läßt sich auf mathematischem Wege die Beziehung zwischen dem Koordinatensystem des Laser-Trackers 27 und dem Koordinatensystem der Messkarosserie 2' herstellen. Messkarosserie 2' und daran befestigter Laser-Tracker 27 lassen sich jetzt wie eine Einheit behandeln.

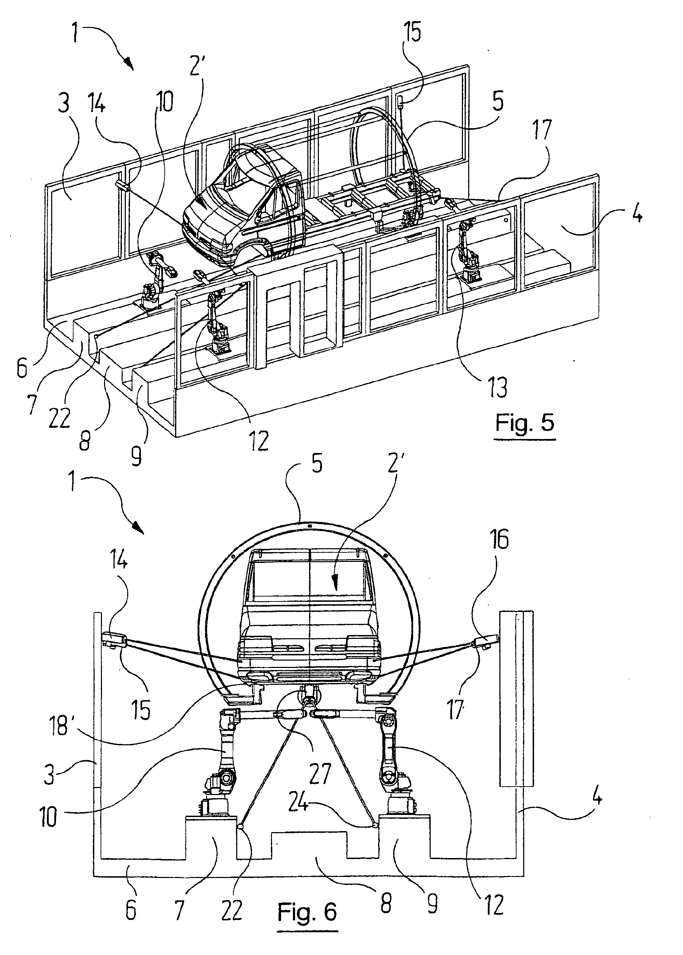

In einem abschließenden Messschritt wird nunmehr die Messkarosserie 2', wie in Figur 5 dargestellt, mit Hilfe des Fördersystems in eine "ideale" Bearbeitungsposition in der Kabine 1 bewegt. Mit Hilfe der Kameras 14, 15, 16, 17 werden die Referenzpunkte 18', 19', 20', 21' der Messkarosserie 2' in ihrer Position vermessen. Außerdem vermisst der mit der Messkarosserie 2' verbundene Laser-Tracker 27 die Kabinen-Referenzpunkte 22, 23, 24, wodurch eine Beziehung zwischen dem Karosserie-Koordinatensystem und dem Kabinen-Koordinatensystem in der "idealen" Bearbeitungsposition hergestellt werden kann. Für diese "ideale" Bearbeitungsposition werden nunmehr die von den verschiedenen Robotern 10, 11, 12, 13 anzufahrenden Stützpunkte festgelegt.

Danach kann die Messkarosserie 2' aus der Kabine 1 aus- und gegebenenfalls in eine nachfolgende Kabine eingefahren werden, wo entsprechende Messvorgänge stattfinden.

Werden in einer Kabine 1 im Mischbetrieb unterschiedliche Fahrzeugkarosserien 2 behandelt, so erfolgen die geschilderten Vorbereitungsmessungen für jede dieser Fahrzeugkarosserien und in jeder Kabine gesondert.

Der Nahtabdichtungsbetrieb geschieht nunmehr in folgender Weise, wobei erneut auf Figur 1 Bezug genommen wird:

Jede Fahrzeugkarosserie 2 wird in eine indiviuelle Behandlungsposition gebracht, die innerhalb der "Reichweite" der verschiedenen Roboter 10, 11, 12, 13 liegt. Wie bereits oben erwähnt, stimmt diese indiviudelle Behandlungsposition normalerweise nicht exakt mit der "idealen" Bearbeitungsposition überein, für welche die Vermessung mit Hilfe der Messkarosserie 2' stattgefunden hat. Mit Hilfe der Kameras 14, 15, 16, 17, welche die Referenz-Punkte 18, 19, 20, 21 der gerade in Bearbeitung befindlichen Fahrzeugkarosserie 2 ausmessen, kann jedoch festgestellt werden, welcher Art die Abweichung zwischen der durch die Fahrzeugkarosserie 2 eingenommenen individuellen Behandlungs-Position und der "idealen" Bearbeitungsposition ist. Da die Beziehung zwischen dem Karossen-Koordinatensystem und den verschiedenen Roboter-Koordinatensystemen über das "vermittelnde", durch die Referenz-Punkte 22, 23, 24 definierte Kabinen-Koordinatensystem nach den vorbereitenden Messungen bekannt ist, kann die festgestellte Positionsabweichung der Fahrzeugkarosserie 2 in neue Stützpunkte umgerechnet werden, die von den TCPs der verschiedenen Roboter 10, 11, 12, 13 angefahren werden müssen.

Auf die Wiedergabe der verschiedenen mathematischen Rechnungen, die zur Herstellung der Beziehungen der verschiedenen Koordinatensysteme erforderlich sind, kann an dieser Stelle verzichtet werden.

Die Verwendung von Laser-Trackern als Messysteme ist im vorliegenden Zusammenhang zwar besonders günstig, da bei jeder Messung drei Werte gemessen werden und die Messgenauigkeit im Bereich von einigen hundertsteln Millimetern liegt. Es sind jedoch auch andere Messverfahren einsetzbar, insbesondere eindimensionale Messysteme. Diese sind in unterschiedlichsten Bauarten, beispielsweise als Seilzug, Messdosen, Lasertriangulation, preiswert erhältlich. Allerdings muss bei diesen Systemen auf die Messgenauigkeit geachtet werden, die zumindest im Bereich von einigen zehnteln Millimetern liegen sollte.

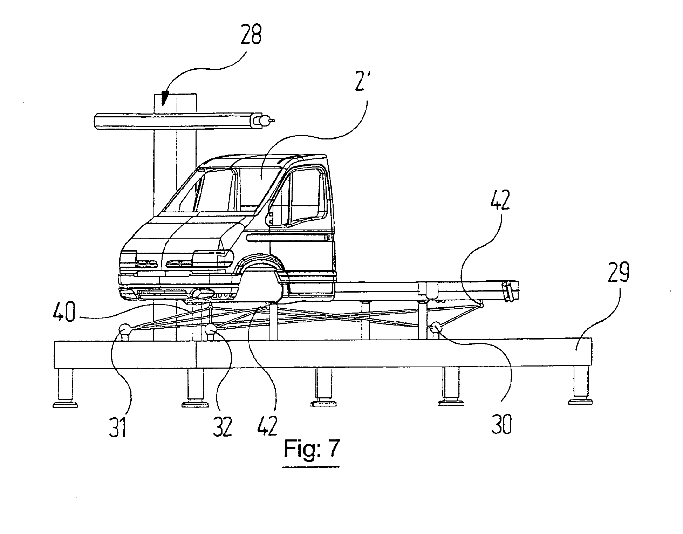

Figur 7 zeigt, wie ein derartiges lineares Messystem, nämlich drei Abstandsssensoren 40, 41, 42, die an der Unterseite der Messkarosserie 2' angebracht sind, mit Hilfe einer Koordinaten-Messmaschine 28 eingemessen wird. Zum mechanischen Ausrichten der Abstandssensoren 40, 41, 42 benötigt man jeweils zwei Antriebe.

## Patentansprüche

1. Verfahren zum Betreiben einer mit mindestens einem Roboter (10, 11, 12, 13) bestückten Behandlungskabine (1), bei dem
a) die zu behandelnden Gegenstände (2) mit mindestens drei nicht auf einer Gerade liegenden Referenzpunkten ausgestattet werden, wodurch ein Gegenstands-Koordinatensystem definiert wird;
b) die zu behandelnden Gegenstände (2) zu einer Behandlungsposition in der Behandlungskabine (1) gefahren werden, in der sie sich in der Reichweite des Roboters (10, 11, 12, 13) befinden;
c) durch Vermessen der Referenzpunkte an den Gegenständen (2) mittels einer stationären Messeinrichtung (14, 15, 16, 17) die exakten Koordinaten der Gegenstände (2) in der Behandlungsposition ermittelt werden;
d) unter Verwendung der ermittelten Koordinaten des Gegenstandes (2) die Achsen des Roboters (10, 11, 12, 13) derart angesteuert werden, dass der "Tool-Center-Point" (TCP) des Roboters (10, 11, 12, 13) einer durch mehrere Stützpunkte vorgegebenen Trajektorie folgt;
wobei
e) vor der Behandlung der Gegenstände (2) ein Vorbereitungs- und Vermessungsvorgang durchgeführt wird, der folgende Schritte umfasst:
ea) es wird ein kabinenfestes Kabinen-Koordinatensystem definiert, indem im Innenraum der Behandlungskabine (1) mindestens drei nicht auf einer Gerade liegende Referenzpunkte (22, 23, 24) eingerichtet und deren Koordinaten bezüglich eines beliebigen, kabinenfesten Ursprungs vermessen werden;
eb) der Roboter (10, 11, 12, 13) wird in dem Kabinen-Koordinatensystem vermessen, so dass eine mathematische Beziehung zwischen dem durch die Roboterachsen vorgegebenen Roboter-Koordinatensystem und dem Kabinen-Koordinatensystem hergestellt werden kann;
f) der eigentliche Betrieb der Behandlungskabine (1) dann die folgenden Schritte umfasst:
fa) die zu behandelnden Gegenstände (2) werden in eine individuelle Behandlungsposition in der Behandlungskabine (1) gefahren;
fb) mit Hilfe der stationären Messeinrichtung (14, 15, 16, 17) wird eine Abweichung der individuellen Behandlungsposition von der idealen Behandlungsposition ermittelt;
fc) die von dem TCP des Roboters (10, 11, 12, 13) anzufahrenden Stützpunkte werden entsprechend der gemessenen Abweichung der individuellen Behandlungsposition von der idealen Behandlungsposition verschoben;
**dadurch gekennzeichnet, dass**
g) vor der Behandlung der Gegenstände (2) ein weiterer Vorbereitungs- und Vermessungsvorgang durchgeführt wird, der folgende Schritte umfasst:
ga) ein Messgegenstand (2'), der dieselben Referenzpunkte (18', 19', 20', 21') wie die zu behandelnden Gegenstände (2) aufweist, wird mit einer mobilen Messeinrichtung (27) verbunden, die in der Lage ist, in ihrem Mess-Koordinatensystem die Koordinaten von Referenzpunkten zu vermessen;
gb) unter Einbeziehung der mobilen Messeinrichtung (27) werden die Referenzpunkte (18', 19', 20', 21') des Messgegenstandes (2') in deren Mess-Koordinatensystem vermessen, derart, dass eine mathematische Beziehung zwischen dem Gegenstands-Koordinatensystem und dem Mess-Koordinatensystem hergestellt werden kann;
gc) der Messgegenstand (2') mit dem mobilen Messsystem (27) wird an eine ideale Behandlungsposition in der Behandlungskabine (1) gefahren und dort werden mit Hilfe des mobilen Messsystems (27) die stationären Referenzpunkte (22, 23, 45) der Behandlungskabine (1) in dessen Mess-Koordinatensystem vermessen, wodurch eine mathematische Beziehung zwischen dem Kabinen-Koordinatensystem und dem Mess-Koordinatensystem und damit auch zwischen dem Roboter-Koordinatensystem und dem Gegenstands-Koordinatensystem hergestellt werden kann.

2. Verfahren nach Anspruch 1, **dadurch gekennzeichnet,**
**dass** als stationäre Messeinrichtung mindestens eine Kamera (14, 15, 16, 17) verwendet wird.

3. Verfahren nach Anspruch 1 oder 2, **dadurch gekennzeichnet, dass** zur Vermessung der stationären Referenzpunkte (22, 23, 24) ein Laser-Tracker (25) eingesetzt wird.

4. Verfahren nach einem der vorhergehenden Ansprüche,
**dadurch gekennzeichnet, dass** als mobiles Messsystem ein Laser-Tracker (27) eingesetzt wird.

5. Verfahren nach einem der vorhergehenden Ansprüche,
**dadurch gekennzeichnet, dass** zur Vermessung der Koordinaten der Referenzpunkte (18', 19', 20', 21') des Messgegenstandes (2') im Mess-Koordinatensystem ein externes, stationäres Messsystem (28) herangezogen wird, wobei das externe, stationäre Messsystem (28) drei stationäre, nicht mit dem Messgegenstand (2') verbundene Referenzpunkte (30, 31, 32) sowie die Referenzpunkte (18', 19', 20', 21') des Messgegenstandes (2') und das mobile Messsytem (27) die stationären Referenzpunkte (30, 31, 32) vermisst.

6. Verfahren nach Anspruch 5, **dadurch gekennzeichnet,**
**dass** das externe stationäre Messsystem eine Koordinaten-Messmaschine (28) ist.

7. Verfahren nach einem der vorhergehenden Ansprüche,
**dadurch gekennzeichnet, dass** mehrere Behandlungskabinen (1) vorgesehen sind, die von dem Messgegenstand (2') und den zu behandelnden Gegenständen (2) hintereinander durchfahren werden.

8. Verfahren nach einem der vorhergehenden Ansprüche,
**dadurch gekennzeichnet, dass** die zu behandelnden Gegenstände (2) Fahrzeugkarosserien sind.

9. Verfahren nach einem der vorhergehenden Ansprüche,
**dadurch gekennzeichnet, dass** die Behandlung eine Beschichtung, insbesondere ein Lackieren, ist.

## Claims

1. Method of operating a treatment booth (1) equipped with at least one robot (10, 11, 12, 13), in which method:
a) the articles (2) to be treated are equipped with at least three reference points which do not lie on a straight line, as a result of which a system of article coordinates is defined;
b) the articles (2) to be treated are conveyed to a treatment position within the treatment booth (1) in which they are located within range of the robot (10, 11, 12, 13);
c) by measuring the reference points on the articles (2) by means of a stationary measuring apparatus (14, 15, 16, 17), it is possible to determine the exact coordinates of the articles (2) in the treatment position;
d) using the coordinates of the article (2) which have been determined, the spindles of the robot (10, 11, 12, 13) are controlled in such a way that the tool centre point (TCP) of the robot (10, 11, 12, 13) follows a trajectory which is predetermined by a number of support points;
wherein,
e) prior to the treatment of the articles (2), a preparing and measuring operation is carried out which comprises the following steps:
ea) a system of booth coordinates which is integral with the booth is defined by setting up, within the interior space of the booth (1), at least three reference points (22, 23, 24) which do not lie on a straight line, and by measuring their coordinates with reference to any desired point of origin which is integral with the booth;
eb) the robot (10, 11, 12, 13) is measured within the system of booth coordinates so that it is possible to produce a mathematical relationship between the system of robot coordinates predetermined by the spindles of the robot and the system of booth coordinates;
f) the actual operation of the treatment booth (1) then comprises the following steps:
fa) the articles (2) to be treated are conveyed into an individual treatment position within the treatment booth (1);
fb) a deviation of the individual treatment position from the ideal treatment position is determined with the aid of the stationary measuring apparatus (14, 15, 16, 17);
fc) the support points to which the TCP of the robot (10, 11, 12, 13) is to move are displaced in a manner corresponding to the measured deviation of the individual treatment position from the ideal treatment position;
**characterised in that**,
g) prior to the treatment of the articles (2), a further preparing and measuring operation is carried out which comprises the following steps:
ga) a measured article (2'), which has the same reference points (18', 19', 20', 21') as the articles (2) to be treated, is connected to a mobile measuring apparatus (27) which is capable of measuring the coordinates of reference points in its system of measuring coordinates;
gb) with the inclusion of the mobile measuring apparatus (27), the reference points (18', 19', 20', 21') of the measured article (2') are measured in the system of measuring coordinates of said apparatus in such a way that it is possible to produce a mathematical relationship between the system of article coordinates and the system of measuring coordinates;
gc) the measured article (2') with the mobile measuring system (27) is conveyed to an ideal treatment position within the treatment booth (1), where the stationary reference points (22, 23, 24) of the treatment booth (1) are measured, with the aid of the mobile measuring system (27), in its system of measuring coordinates, as a result of which it is possible to produce a mathematical relationship between the system of booth coordinates and the system of measuring coordinates, and thereby also between the system of robot coordinates and the system of article coordinates.

2. Method according to Claim 1, **characterised in that** at least one camera (14, 15, 16, 17) is used as the stationary measuring apparatus.

3. Method according to Claim 1 or 2, **characterised in that** a laser tracker (25) is employed for measuring the stationary reference points (22, 23, 24).

4. Method according to one of the preceding claims, **characterised in that** a laser tracker (27) is employed as the mobile measuring system.

5. Method according to one of the preceding claims, **characterised in that** an external, stationary measuring system (28) is utilised for measuring the coordinates of the reference points (18', 19', 20', 21') of the measured article (2') within the system of measuring coordinates, said external, stationary measuring system (28) measuring three stationary reference points (30, 31, 32), which are not connected to the measured article (2'), and also the reference points (18', 19', 20', 21') of said measured article (2'), and the mobile measuring system (27) measuring the stationary reference points (30, 31, 32).

6. Method according to Claim 5, **characterised in that** the external, stationary measuring system is a coordinates-measuring machine (28).

7. Method according to one of the preceding claims, **characterised in that** a number of treatment booths (1) are provided, through which the measured article (2') and the articles (2) to be treated travel one behind another.

8. Method according to one of the preceding claims, **characterised in that** the articles (2) to be treated are vehicle bodies.

9. Method according to one of the preceding claims, **characterised in that** the treatment is a coating operation, in particular a painting operation.

## Revendications

1. Procédé d'actionnement d'une cabine de traitement (1) équipée d'au moins un robot (10, 11, 12, 13), procédé dans lequel
a) les objets (2) à traiter sont pourvus d'au moins trois points de référence non situés sur une ligne droite, définissant ainsi un système de coordonnées desdits objets ;
b) lesdits objets (2) à traiter sont amenés, dans la cabine de traitement (1), à un emplacement de traitement auquel ils se trouvent dans le rayon d'action du robot (10, 11, 12, 13) ;
c) les coordonnées exactes des objets (2) sont déterminées audit emplacement de traitement par mesure des points de référence, sur lesdits objets (2), au moyen d'un dispositif mesureur fixe (14, 15, 16, 17) ;
d) les axes du robot (10, 11, 12, 13) sont activés, par utilisation des coordonnées de l'objet (2) déterminées, de façon telle que le point central d'outil (TCP) dudit robot (10, 11, 12, 13) suive une trajectoire préétablie par plusieurs points d'appui ;
sachant que,
e) préalablement au traitement des objets (2), il s'opère un processus de préparation et de mesure englobant les étapes suivantes :
ea) un système de coordonnées de la cabine, faisant corps avec ladite cabine, est défini par instauration, dans l'espace intérieur de ladite cabine de traitement (1), d'au moins trois points de référence (22, 23, 24) qui ne sont pas situés sur une ligne droite, et dont les coordonnées sont mesurées par rapport à une quelconque origine faisant corps avec ladite cabine ;
eb) le robot (10, 11, 12, 13) est mesuré dans ledit système de coordonnées de la cabine, permettant ainsi d'établir une relation mathématique entre le système de coordonnées du robot, préétabli par les axes dudit robot, et ledit système de coordonnées de la cabine ;
f) l'actionnement de la cabine de traitement (1), proprement dit, inclut ensuite les étapes suivantes :
fa) les objets (2) à traiter sont amenés à un emplacement individuel de traitement, dans ladite cabine de traitement (1) ;
fb) un écart dudit emplacement individuel de traitement, par rapport à l'emplacement idéal de traitement, est déterminé à l'aide du dispositif mesureur fixe (14, 15, 16, 17) ;
fc) les points d'appui, devant être abordés par le TCP du robot (10, 11, 12, 13), sont déplacés d'une manière correspondant audit écart mesuré de l'emplacement individuel de traitement, par rapport à l'emplacement idéal de traitement ;
**caractérisé par le fait que**,
g) préalablement au traitement des objets (2), il s'opère un processus supplémentaire de préparation et de mesure englobant les étapes suivantes :
ga) un objet de mesure (2'), présentant les mêmes points de référence (18', 19', 20', 21') que les objets (2) à traiter, est relié à un dispositif mesureur mobile (27) qui est à même de mesurer les coordonnées de points de référence, dans son système de coordonnées de mesure ;
gb) les points de référence (18', 19', 20', 21') dudit objet de mesure (2') sont mesurés avec implication dudit dispositif mesureur mobile (27), dans le système de coordonnées de mesure de ce dernier, de telle sorte qu'une relation mathématique puisse être établie entre le système de coordonnées de l'objet et le système de coordonnées de mesure ;
gc) ledit objet de mesure (2') est amené dans la cabine de traitement (1), avec le système mesureur mobile (27), à un emplacement idéal de traitement auquel les points fixes de référence (22, 23, 24) de ladite cabine de traitement (1) sont mesurés à l'aide dudit système mesureur mobile (27), dans le système de coordonnées de mesure de ce dernier, de telle sorte qu'une relation mathématique puisse être établie entre le système de coordonnées de la cabine et le système de coordonnées de mesure, et donc également entre le système de coordonnées du robot et le système de coordonnées de l'objet.

2. Procédé selon la revendication 1, **caractérisé par le fait qu'**au moins une caméra (14, 15, 16, 17) est utilisée en tant que dispositif mesureur fixe.

3. Procédé selon la revendication 1 ou 2, **caractérisé par le fait qu'**un laser de poursuite (25) est employé pour mesurer les points fixes de référence (22, 23, 24).

4. Procédé selon l'une des revendications précédentes, **caractérisé par le fait qu'**un laser de poursuite (27) est employé en tant que système mesureur mobile.

5. Procédé selon l'une des revendications précédentes, **caractérisé par le fait qu'**il est recouru à un système mesureur fixe extérieur (28) pour mesurer les coordonnées des points de référence (18', 19', 20', 21') de l'objet de mesure (2'), dans le système de coordonnées de mesure, sachant que ledit système mesureur fixe extérieur (28) mesure trois points fixes de référence (30, 31, 32) non reliés audit objet de mesure (2'), ainsi que lesdits points de référence (18', 19', 20', 21') dudit objet de mesure (2'), et que le système mesureur mobile (27) mesure lesdits points fixes de référence (30, 31, 32).

6. Procédé selon la revendication 5, **caractérisé par le fait que** le système mesureur fixe extérieur est une machine (28) de mesure de coordonnées.

7. Procédé selon l'une des revendications précédentes, **caractérisé par le fait qu'**il est prévu plusieurs cabines de traitement (1) parcourues, en succession, par l'objet de mesure (2') et par les objets (2) à traiter.

8. Procédé selon l'une des revendications précédentes, **caractérisé par le fait que** les objets (2) à traiter sont des carrosseries de véhicules.

9. Procédé selon l'une des revendications précédentes, **caractérisé par le fait que** le traitement se présente comme un revêtement, notamment comme un laquage.
